# EUROPEAN PATENT APPLICATION

(11) **EP 2 145 702 A1**
(43) Date of publication of application: **20.01.2010**
(21) Application number: 08160640.2
(22) Date of filing: 17.07.2008
(51) Int. Cl.: B09B 3/00, B09C 1/10

(54) **Treatment of drilling waste**

(71) Applicant: Sita Remediation, 1850 Grimbergen (BE)
(72) Inventor: Deroover, Johan, 2800 Mechelen (BE); Perseo, Pietro, 1180 Uccle (BE); Van Ombergen, Gunther, 9130 Kieldrecht (BE)
(74) Representative: Claeys, Pierre

(57) **Abstract**

Process of treating drilling waste comprising C₁₀-C₂₅ alcanes comprising the steps of I. forming a mixture of water and drilling waste, growing microorganisms naturally present with a formation of an activated biological slurry, and II. addition of said activated biological slurry to the untreated drilling waste and degradation of said C₁₀-C₂₅ alcanes by said micro-organisms.

## Description

The present invention relates to a method of treating drilling waste comprising C₁₀-C₂₅ alcanes.

During the last years, significant quantities of drill cuttings contaminated with high levels of petroleum hydrocarbons were produced. These cuttings represent a significant cost for treatment / disposal.

Drilling waste are product originating from the boring of oil/gas wells during exploration. This product contains alcanes such as C₁₀-C₂₅ alcanes in a concentration from 60.000 to 110.000 ppm.

WO 2004/013455 describes a process that uses steam to wet drilling cuttings before decontaminating the drill cuttings by micro-organisms. In this process, there is a need to inoculate micro-organisms to reach acceptable values of contaminating residues. The process according to this document requires energy for producing steam and complex recycling plant to recover a portion of the steam by removing volatile organic hydrocarbon by activated carbon.

For specific C₁₀-C₂₅ alcanes, it is known to use a thermal process involving high costs and an important carbon dioxide production.

Unfortunately such processes do not allow to threat the drilling waste biologically in an ecologic manner, i.e. without high energy consumption and with reduced greenhouse gas production.

It is an object of the invention to palliate at least some of these drawbacks by providing an alternative biological process to these thermal methods which is able to threat the drilling waste till to reach acceptable pollution levels in order to reuse the material in specific applications such as to reach a residual concentration in oil less than 10.000 ppm.

To this end, the invention provides a process as mentioned in the beginning comprising the steps of:
- forming a mixture of water and of a first portion of drilling waste under aerobic conditions,
- growing micro-organisms naturally present in said drilling waste for a predetermined period comprised between 4 to 10 days under aerobic conditions with a formation of an activated biological slurry,
- addition of the activated biological slurry to a second portion of drilling waste, and
- degradation of said C₁₀-C₂₅ alcanes by said micro-organisms

The process according to the invention activates the growing of micro-organisms naturally present in the drilling waste, and such micro-organisms being able to support such contaminated environment. The aerobic conditions increase the growing rate of the micro-organisms. Indeed, in drilling waste, the micro-organisms that are naturally present can be considered as being in a latency period. In this case, the growing rate is quite inexistent and the micro-organisms are said in a dormancy state. To contribute to degradation of contaminating hydrocarbon product, the activity of the micro-organisms should be improved. To improve the micro-organisms activity, there is a need to not only increase the number of micro-organisms but also to have them in a growing state, i.e. with a maximal metabolic activity.

By growing the micro-organisms naturally present in a mixture of a first portion of drilling waste and water under aerobic conditions to form an activated biological slurry, the number of micro-organisms is exponentially increased and the metabolic activity thereof reaches a maximum during the growing phase.

The activated biological slurry inoculates the second portion of drilling waste thereby providing a basis for priming the growing of the micro-organisms in the second portion of drilling waste still in dormancy state. The addition of the activated biological slurry without any treatment, such a filtration and so on, allows the growing factors secreted by the micro-organisms of the activated biological slurry to contribute to the passage from the dormancy state to the growing state of the micro-organisms of the second portion of the drilling waste.

The method according to the invention does not need any thermal source or high energy consumption to reach acceptable value of contaminating hydrocarbon. In the contrary, the method according to the invention allows to reach values as less then 10.000 ppm hydrocarbons by using biological and ecological power.

Advantageously, the second portion of drilling waste is accumulated in piles, windrows or swath of accumulated drilling waste. This shape of accumulated material allows optimal exchange of moisture, oxygen and nutriments between the drilling waste and the environment.

Preferably, the piles, windrows or swath have a width comprised between 3 and 5 meters and a height comprised between 1 and 2 meters. Those values have been found to be the optimum values for any improved alcane degradation by the micro-organisms.

In a preferred embodiment, the drilling waste is firstly dewatered. Usually, the drilling waste product is wet but presents a too weak physical consistency which allows to build windrows or piles. However, in some case, if the material is too wet and present a high water content and a bad physical structure, a specific dewatering operation is made using for example vertical centrifuge and/or vacuum rotative drum filters and/or belt filter and/or chamber filter press.

In a particularly preferred embodiment, the C₁₀-C₂₅ alcanes are alcanes presenting a chain length between C₁₀ and C₂₀, preferably C₁₀-C₂₀ alcanes with 80% between C₁₂ and C₁₆.

According regulations of some countries, oil or gas exploitation is done using petroleum distillates products such as parafins and particularly iso-parafins. The invention is particularly suitable to treat such iso-parafins being alcanes presenting a chain length between C₁₀ and C₂₀ with 80% by weight between C₁₂ and C₁₆, with respect to the total hydrocarbon weight.

In a variant of the invention, the process further comprises a step of biochemical preparation, preferably before the step of growing said micro-organisms, comprising an addition of at least one oxidizing agent and an oxidation of the C₁₀-C₂₅ alcanes into n-alcohols and shorter hydrocarbon chains, the longer chains (> C₂₀) are particularly reduced into chains between C₁₂-C₂₀. Therefore, the drilling waste is pretreated by the chemical action of an oxidizing agent and the following reactions take place :
1. Alkane is transformed into n-alcohols, which can degrade in different pathways till to be completely degraded.

   *O*• + *aCₓH_{y}* ⇒*a CₓH_{y-1} -OH*
2. Alkane is destructed in order to reach shorter hydrocarbon chains which are also entering in the same pathway as the upwritten reaction.

   *aCₓH_{y}* + *bO*₂ ⇒ *cCₓ₋ₙH_{y-n}* + *dH₂O*

0• and 0₂ are degradation products originating from the oxidizing agent.

Hence, this reaction allows to oxidize the hydrocarbon aliphatic chains in order to produce shorter chains and some unsaturated alkyl chains which will be more easily degraded by the micro-organisms.

Advantageously, the oxidizing agent is chosen in the group consisting of persulphates, peroxide, in particular hydrogen peroxide, derivates and mixture thereof or Na₂S₂0₈ in powder state.

Preferably, the said oxidizing agent is added in an amount comprised between 5 to 30 kg/ton of drilling waste, more preferably between 15 to 25 kg/ton drilling waste.

Preferably, the mixture of water and of the first portion of drilling waste is supplemented with a nitrogen and/or a phosphorus source. The supplementation with a source of nitrogen and/or phosphorous contribute to improve the growing of the micro-organisms since being essential growing substrate, readily and easily available to the micro-organisms consumption.

Exemplary sources of nitrogen and/or phosphorus that can be used in the method according to the invention comprises, without being limited thereto; ammonium nitrate, ammonium sulfate, ammonium dihydrogenphosphate, phosphoric anhydride, their derivates and their mixture or even a mixture comprising the said sources of nitrogen and/or phosphorus. In other embodiment, magnesium oxide can also be added.

Preferably, the mixture of water and of said first portion of drilling waste comprises from 10 to 30 %w fresh drilling waste, preferably about 20 %w and from 90 to 70 %w water and preferably about 80%w water, with respect to the total weight of the mixture.

In a most preferred embodiment, the mixture of said first portion of drilling waste and water is stirred by a rotating impeller to provide said aerobic conditions.

As mentioned here before, the drilling waste is bioactivated by the activated biological slurry prepared with preferably 20% fresh drilling waste and 80% water in a special mixing tank. The aerobic conditions are provided by mechanical action. The mixing module and the stirring shaft is providing fine air bubbles in the slurry.

The mechanical agitation and aeration is provided by means of a rotating impeller on an upright shaft. Pulp is drawn upward into the rotor by the rotor lower portion. Simultaneously the rotor's upper end draws air down the standpipe for thorough mixing with the pulp inside the rotor. The aerated pulp is then expelled by a strong centrifugal force. The shearing action of the stator breaks the air into fine bubbles. This action uniformly distributes a large volume of air in the form of fine bubbles in all parts of the tank.

The slurry is ready to be added after from 4 to 10 days and preferably about one week. The slurry is preferably added to the drilling waste coming from the step said "Biochemical preparation".

Preferably, the growing step is performed with adjustment of pH.

Advantageously, the second portion of drilling waste to which said activated biological slurry has been added is mixed with a turning machine at regular intervals. Preferably, the second portion is also supplemented with said nitrogen and/or phosphorous source.

Therefore, the oxygen, being required by the micro-organisms to grow, is provided by means of mechanical action. This step is called bio aeration.

In a particular embodiment, said second portion of drilling waste is treated with air blowing/extraction units as a specific biopile unit.

The special windrows are mixed with a turning machine creating high velocity mixing / aeration of the material and thereby providing homogenization of the waste, particle size reduction (improvement of the mass transfer surface) and aeration of the pile

The turning machine is advantageously provided with a specific rotor comprising adapted steel teeths.The specific shape (angle) of the pile or windrows is a result of the modified steel plate in the rear part of the turning machine, thereby having a positive effect on the passive oxygen diffusion into the pile or windrows.

At this step, the degradation of the hydrocarbon components is monitored by means of chemical analysis (GC analysis on hydrocarbon compounds) as well as temperature inside the heap and moisture content of the material.

It has been shown that an acceptable level (about 5000 mg/kg) of degradated hydrocarbon components is reached within 90 to 210 days.

In a particular embodiment, said second portion of drilling waste is treated with air blowing/extraction units as a specific biopile unit.

Other embodiments of the process according to the invention are mentioned in the annexed claims.

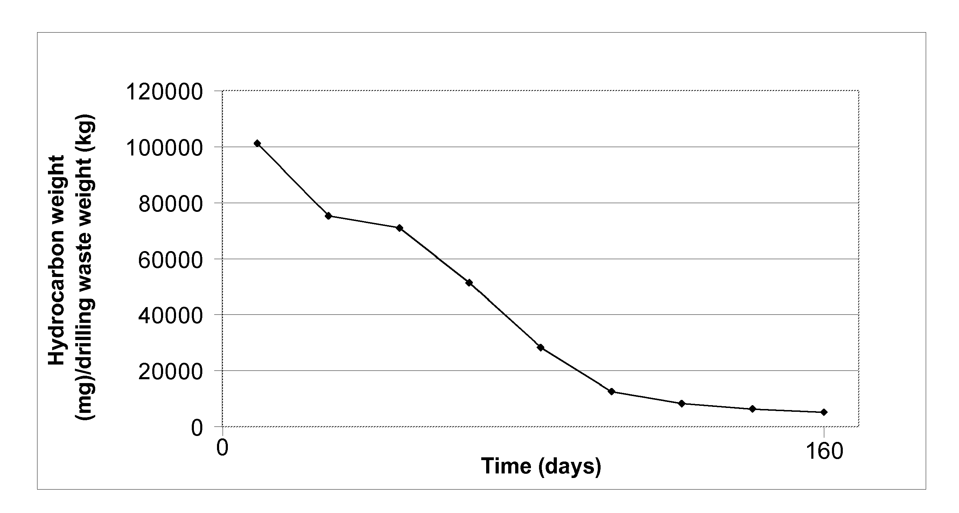

Other characteristics and advantages of the invention will appear more clearly in the light of the following description of a non limiting example of the invention in which all possible steps of the invention have been performed, while referring to the figure.

The figure is a graphic showing the degradation of hydrocarbon during time. The hydrocarbon weight (mg)/drilling waste weight (kg) have been plotted in function of the time (160 days)

### EXAMPLE.-

150 tons of drilling waste have been treated by the process according to the invention. The start concentration in hydrocarbons is 101.000 mg/kg for the drilling waste accumulated in a windrow. A first portion of the drilling waste has been off-taken and mixed with 80% water to obtain a final volume of 3m^{3.}

The mixture thus formed has been supplemented with a source of nitrogen and of phosphorus and the mixture was stirred for growing for about a week to form said activated biological slurry.

Sodium persulfate has been added as oxidizing agent to the rest of the drilling waste (second portion) in an amount of about 20 kg per ton of drilling waste (biochemical preparation).

The mixture thus formed has been supplemented with a source of nitrogen and of phosphorus and the mixture was stirred for growing for about a week to form said activated biological slurry.

The activated biological slurry was added to the second portion of the drilling waste coming from the step said "Biochemical preparation" (i.e. to which the oxidizing agent has been added). The second portion of the drilling waste is also provided with nitrogen and phosphorus source. After that, the windrow has been mixed with a turning machine as often as necessary in function of the degradation of the hydrocarbons. (such mixing provides further oxygen for the microorganisms).

At this step, the degradation of the hydrocarbon components is monitored by means of chemical analysis (GC analysis on hydrocarbon compounds as shown in the figure) as well as temperature inside the heap and moisture content of the material. As it can be seen from the figure, the final concentration was about 5000 mg/kg of drilling waste after about 130 days. When the treatment has reached the desired level, the pile is declared "clean".

Although the preferred embodiments of the invention have been disclosed for illustrative purpose, those skilled in the art will appreciate that various modifications, additions or substitutions are possible, without departing from the scope and spirit of the invention as disclosed in the accompanying claims.

For example, if the moisture content or the hydrocarbons degradation rate is not within the expected range, after the growing of the micro-organisms, a last step is performed in which the biological action is continuated using an air blowing / extraction unit as source of oxygen. This unit is a specific biopile unit. A network of perforated pipes is introduced into the heap and connected to blowers units.

The invention should be contemplated as a combination of several steps aforementioned that are linked and all contributes to improve the treatment of C₁₀-C₂₅ alcanes necessary. Each step can have a different time duration in function of the external conditions and in function of the start concentration of the waste.

Some process falling under the scope of the present invention comprises some steps that can be done in a specific order or in another order. For example, without being limitative, some of the possible pathways are :
- dewatering physical preparation ; biochemical preparation; bio activation; biological growing phase; bio aeration ; ending process
- dewatering physical preparation ; biochemical preparation; bio activation; biological growing phase; bio aeration ;
- bio stimulation ; biochemical preparation; biological growing phase; bio aeration ; ending process
- dewatering physical preparation ; biochemical preparation; biological growing phase; bio aeration ;
- this is not a limitative list

Particularly, the process according to the invention, using biological process, allows to reach acceptable values for decontamination of an hazardous waste avoiding to perform thermal treatments on the waste.

The biological treatment allows also to reach acceptable levels to reuse the material in some civil works applications.

The process according to the invention allows to not add special structure components as wood chips, etc... The weight of the waste will not be increased by this process, reducing the costs for the treated material. Further, the total weight of the drilling waste is reduced because water content reduction.

The invention presents a better energy balance in comparison to usual existing process. No thermal device is used.

The employed chemical products are mineral basics chemicals, no specific formulations are required.

The treatment duration of the bioremediation process according to the invention is reduced thanks to the preparations steps (physical and biochemical).

## Claims

1. Process of treating drilling waste comprising C₁₀-C₂₅ alcanes comprising the steps of :
- forming a mixture of water and of a first portion of drilling waste under aerobic conditions,
- growing micro-organisms naturally present in said drilling waste for a predetermined period comprised between 4 to 10 days under aerobic conditions with a formation of an activated biological slurry,
- addition of the activated biological slurry to a second portion of drilling waste, and
- degradation of said C₁₀-C₂₅ alcanes by said micro-organisms

2. Process according to claim 1, wherein the second portion of drilling waste is accumulated in piles, windrows or swath of accumulated drilling waste

3. Process according to claim 2, wherein the piles, windrows or swath have a width comprised between 3 and 5 meters and a height comprised between 1 and 2 meters.

4. Process according to anyone of the claims 1 to 3, wherein said drilling waste is firstly dewatered.

5. Process according to anyone of the precedent claims, wherein the C₁₀-C₂₅ alcanes are alcanes presenting a chain length between C₁₀ and C₂₀, preferably C₁₀-C₂₀ alcanes with 80% by weight between C₁₂ and C₁₆.

6. Process according to anyone of the precedent claims, further comprising a step of biochemical preparation, preferably before the step of growing said micro-organisms, comprising an addition of at least one oxidizing agent and an oxidation of the C₁₀-C₂₅ alcanes into n-alcohols and shorter hydrocarbon chains.

7. Process according to claim 6, wherein said oxidizing agent is chosen in the group consisting of persulphates, peroxide, in particular hydrogen peroxide, derivates and mixture thereof.

8. Method according to anyone of the claims 1 to 7, wherein said mixture of water and of the first portion of drilling waste is supplemented with a nitrogen and/or a phosphorus source.

9. Method according to anyone of the claims 1 to 8, wherein said mixture of water and of said first portion of drilling waste comprises from 10 to 30 %w fresh drilling waste, preferably about 20 %w and from 90 to 70 %w water and preferably about 80%w water, with respect to the total weight of the mixture.

10. Method according to anyone of the claims 1 to 9, wherein the mixture of said first portion of drilling waste and water is stirred by a rotating impeller to provide said aerobic conditions.

11. Method according to anyone of the claims 1 to 10, wherein the growing step is performed with adjustment of pH.

12. Method according to anyone of the claims 1 to 11, wherein the second portion of drilling waste to which said activated biological slurry has been added is mixed with a turning machine at regular intervals.

13. Method according to anyone of the claims 1 to 12, wherein said second portion of drilling waste is further supplemented with a nitrogen and/or a phosphorus source.

14. Method according to anyone of the claims 1 to 13, wherein said second portion of drilling waste is treated with air blowing/extraction units.
